(19) Europäisches Patentamt
European Patent Office
Office européen des brevets

(11) Publication number: **0 194 889**
**A2**

(12) # EUROPEAN PATENT APPLICATION

(21) Application number: 86301833.9

(22) Date of filing: 13.03.86

(51) Int. Cl.[4]: C 08 F 283/04

(30) Priority: 13.03.85 US 711219
16.09.85 US 776757

(43) Date of publication of application:
17.09.86 Bulletin 86/38

(84) Designated Contracting States:
AT BE CH DE FR GB IT LI LU NL SE

(71) Applicant: SUN CHEMICAL CORPORATION
200 Park Avenue
New York New York(US)

(72) Inventor: Kveglis, Albert A.
6 Buckingham Circle
Pine Brook New Jersey(US)

(72) Inventor: Catena, Robert J.
224 Baldwin Terrace
Organe New Jersey(US)

(74) Representative: Lawrence, Peter Robin
Broughton et al,
GILL JENNINGS & EVERY 53-64 Chancery Lane
London WC2A 1HN(GB)

(54) **Polyamide acrylic graft copolymers.**

(57) A water-dispersable graft copolymer of a polyamide and an acrylic monomer is prepared by reacting a polyamide with an acrylic monomer in an alcohol solution in the presence of a free radical peroxidic initiator, followed by neutralisation of the resultant copolymer solution. The product is particularly useful as the resin of a water-based printing ink.

Croydon Printing Company Ltd.

Sun Chemical Corporation 60/2572/02

Polyamide Acrylic Graft Copolymers

The use in printing inks of polyamide resins and of acrylic resins is known. The use of polyamide resins in inks imparts to them excellent bond strength, adhesion, gloss, and printability. They are not, however, useful for aqueous inks because they are not water-dispersable. On the other hand, water-dispersable acrylic and other vinyl resins can be made but they do not impart to inks the desirable properties obtainable with polyamides. These two resins are generally incompatible, since upon mixing solutions of the two they will separate into different phases.

A novel polymer according to the invention is a graft copolymer of a polyamide with a vinyl monomer, preferably in the form of an acid salt. Thus in the invention polyamide resins and vinyl monomers are chemically grafted into copolymers. It is found that these can possess the desirable properties of each type of polymer. Thus the copolymers can give very satisfactory results when used in water-based inks and coatings.

The invention includes a process of making the polymers which involves reacting a polyamide with a vinyl monomer in an alcohol solution in the presence of a free radical peroxidic initiator, followed ——————————

by adjusting to a pH of greater than 7 effective to obtain a water dispersible copolymer.

Any polyamide that is suitable for use in printing inks can be used. U.S. patent No. 3,412,115, for example discloses polyamides of a polymeric fatty acid, an alkylene diamine, and a hexanoic acid. U.S. patent No. 3,778,394 discloses polymeric fatty acid polyamides modified with a rosin adduct. Other useful polyamides are disclosed in U.S. patent No. Re. 28,533 and in British patent No. 1,236,088. Polyamides normally used in flexographic printing inks are reaction products of dimerized fatty acids, dicarboxylic acids, polyamines, and monocarboxylic acids.

Examples of dimerized fatty acids useful in producing polyamides are those derived by thermal polymerization of soya or tall oil fatty acids resulting in mixtures of dimer, trimer plus higher fatty acids and unreacted fatty acid, depending on the nature of the starting material and reaction conditions. Various grades are available ranging from 97% by weight of dimer fatty acid to more than 35% by weight of trimer fatty acid, with a dimer fatty acid content of 83-95% by weight preferred.

Dicarboxylic acids useful in producing polyamides may contain from 2-25 carbon atoms and include oxalic acid fumaric acid, maleic acid, malonic acid, succinic acid, glutaric acid, pimelic acid, suberic acid, azelaic acid, sebacic acid, 1, 12-dodecanedioic acid, phthalic acid, isophthalic acid, terephthalic acid, 1,3- and 1,4-cyclohexane dicarboxylic acids, naphthalene dicarboxylic acid and C-21 cycloaliphatic dicarboxylic acid. Preferred dicarboxylic acids are aliphatic diacids having at least 6 and preferably 6-12 carbon atoms such as adipic acid and azelaic acid.

A wide variety of monocarboxylic acids can be employed to prepare polyamides. These can be represented by the general formula: RCOOH where R-alkyl, cycloalkyl and aryl. Representative of alkyl having at least 1 to 24 carbon atoms include methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, heneicosyl and isomers thereof. Examples of cycloalkyl include cyclopropyl, cyclobutyl, cyclopentyl, cyclohexyl and the like. The term aryl would include phenyl, naphthyl and alkyl substituted derivatives thereof. Preferred monocarboxylic acids include acetic acid, propionic acid, 2-ethylhexoic acid, pelargonic acid, decanoic acid, myristic acid, hexadecanoic acid, palmitic acid, stearic acid, oleic acid, linoleic acid, benzoic acid, salicylic acid and mixtures thereof.

The organic diamines employed in preparing polyamides include aliphatic, cycloaliphatic oraromatic diamines of the formula: $H_2N-R^4NH_2$ where $R^4$ is an aliphatic, aromatic or cycloaliphatic hydrocarbon radical. Among the preferred diamines are ethylenediamine, 1,2-propylenediamine, 1,3-propylenediamine, 1,4-diaminobutane, p-xylylenediamine, m - xylylenediamine, piperazine, 1,6-hexamethylenediamine, 1,5-pentamethylenediamine, 4,4'-methylenebis (cyclohexylamine), 1,2-diaminocyclohexane, 2,2-bis (4-cyclohexylamino)propane, isophoronediamine, polyglycoldiamines, cyclohexanebis(methylamine), bis-1,4-(2'-aminoethyl)benezene and the like. Polyamines employed in preparing polyamides include polyamines defined by the formula: $H_2N(R_2^4NH)_n R_2^4 NH_2$ where $R^4$ is defined as above and n is 1 to 3. Preferred polyamines in this category are diethylenetriamine, triethylenetetramine, tetraethylenepentamine and the like.

A preferred polyamide is prepared from dimer fatty acid azelaic acid, ethylenediamine and piperazine. Also preferred is a polyamide prepared from dimer fatty acid

(greater than 83% dimer content), propionic acid, azelaic acid, ethylenediamine and hexamethylenediamine. The stoichiometric ratios of ingredients used to prepare the polyamides are chosen in such a manner as to promote a high degree of polymerization. The techniques for preparing polyamides in this fashion are well known to those skilled in the art and generally involves combining the acid components with the amine components to form the amine salt of the acid components and then subsequently heating to convert the salt into the polyamide with the liberation of water.

It is preferred that the polyamide resin used in this invention have a molecular weight of at leat 15,000 in order that a copolymer can be prepared which upon use in a water based printing ink exhibits good stability and a high bond strength of at least 300 grams/linerar inch preferably at least 400 grams/linerar inch, as measured on an Instron bond strength tester manufactured by Instron Corporation. With lower molecular weight polyamides (i.e. below 15,000) the resultant copolymer has been observed to be less stable in that the viscosity of the copolymer solution changes upon standing resulting in gellation which sets the mass rendering the copolymer solution unsuitable for an ink formulation. In addition with such lower molecular weight polyamides the resultant copolymer generally exhibits a bond strength of below 300 grams/linear inch as measured on an Instron bond strength tester, which is unsuitable for ink applications, such as a laminating ink, where high bond strength is needed to prevent the ink from separating from the film surface upon lamination resulting in spotting and decaling.

Suitable vinyl monomers useful in preparing the copolymers of this invention include acrylic and methacrylic acids; $C_1$-$C_{18}$ alkyl esters of acrylic acid and methacrylic acid; hydroxyalkylacrylates and methacrylates; styrene and alkyl-substituted styrene; vinylpyrrolidone; terpene-derived acrylates and methacrylates; acrylamide and methacrylamide;

cyanoalkylacrylates and methacrylates; and the like, and their mixtures. Acrylic monomers, especially including free carboxylic groups, are preferred as some or preferably all of the vinyl monomer.

Acrylic monomers useful in the present invention are derivatives of propenoic acid (acrylic acid), and 2-methylpropenoic acid (methacrylic acid). Besides the acids themselves, their derivatives, either alone or in combination, may be used in the present invention.

These derivatives can be reprsented by the general formula:

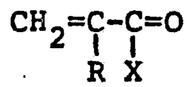

where R = H or $CH_3$

$X = OR^1, NR^2_2, Cl$

where $R^2$ = H, $C_1$-$C_{18}$ alkyl or cycloalkyl, 2-hydroxyethyl, hydroxpropyl, hydroxybutyl, 2-cyanoethyl

$R^2 = H, CH_3, CH_2OR^3$

where $R^3 = H, CH_3, C_2H_5, C_3H_7, C_4H_9$

Additionally, other vinyl monomers, known to those skilled in the art, which readily copolymerise with acrylates and methacrylates can be employed in the present invention. Examples of these are styrene and substituted styrenes, N-vinylpyrrolidone, butadiene, isoprene, N-vinylcarbazole, vinyloxazoline esters and the like.

Among the preferred monomers are methylacrylate, acrylic acid, methylmethacrylate, isobornylacrylate and methacrylate, hydroxyethylacrylate and methacrylate, hydroxyproplacrylate and methacrylate, ethylmethacrylate, butylacrylate and butyl methacrylate, isobutylmethacrylate, styrene, N-vinypyrollidone and the like. The preferred acrylic monomer should be free from amino

groups which result in a copolymer which exhibits poor solution stability (gels on standing).

The polyamide and the vinyl monomer are generally added to the reaction solution in the ratios of about 5-95:95-5 parts by weight, and preferably in the

ratios of about 40-90:10-60 parts by weight of polyamide:vinyl monomer.

The polyamide and the vinyl monomer(s) components are each in solution in an alcohol when they are reacted. Any suitable alcohol can be used, examples including but not being limited to aliphatic alcohols, such as those having 1 to 4 carbon atoms, e.g., methanol, ethanol, propyl alcohols, butyl alcohols, and their mixtures.

Intiators for the free radical grafting of these two resins include peroxidics such as acyl peroxides, dialkyl peroxides, peroxy esters, hydroperoxides, and the like in an amount of abot 3% ot 15% based on the weight of the acrylic portion. The peroxidic free radical initiators are used as they promote grafting of the acrylic monomer onto the polyamide. Inorder to obtain a copolymer with the desired properties generally at least 15%, preferably at least 20%, by weight of the copolymer comprises a polyamide-acrylic graft. The peroxy ester is preferred as it promotes higher conversion of acrylic monomer to polymer as well as a higher degree of grafting onto the polyamide. In comparison, other free radical initiators such as azo compunds are unsuitable because of the lower conversion of acrylic monomer to polymer and the azo compunds do not tend to promote grafting onto the polyamide.

The polymerization reaction is basically as follows:

$$\text{Polyamide + Acrylic Monomers} \xrightarrow[\Delta]{R} \text{Polyamide+Polyamide-g-Acrylic+Acrylic Polymer.}$$

It generally takes place at a temperature within the range of about 60 degrees to 15 degrees C., and preferably within the range of about 75 degrees to 115 degrees C., and preferably within the range of about 75 degrees to 115 degrees C. Preferably the resultant copolymer solution has a viscosity of 5 to 250 poises at 40 to 50% solids ads measured on a Brookfield viscometer at room temperature.

By the process of this invention there is obtained a grafting of at least one vinyl monomer on to a polyamide backbone, resulting in a polyamide with grafted acrylic side chains. The vinyl is grafted to the polyamide via abstraction of allylic H atoms on to the dimer acid portion of the polyamide.

By the free radical grafting process of this invention, polyamides and acrylics that normally are incompatible are copolymerised to a product that not only retains the excellent bond strength, adhesion, gloss and printability of the alcohol-soluble polyamide, but also imparts water dispersability via the grafted carboxyl groups or other suitable hydrophilic, solubilising, groups in the vinyl monomer, making them extremely suitable for use as varnishes for water-based, e.g., flexographic and gravure printing inks for substrates such as packaging films.

A very important aspect of the present invention involves the neutralisation of the resultant copolymer by the addition of a base, preferably an amine, especially when the polymer has free carboxylic groups. Without neutralisation of an acidic graft copolymer, water dispersability may be inadequate. Upon neutralisation to a pH of at least 7 effective to obtain a water-dispersable copolymer, preferably 8.5-10, the copolymer becomes dispersable in water to such an extent that water-dispersable inks can be prepared from the neutralised varnishes. By water-dispersable is meant the ability to form a homogeneous aqueous colloidal dispersion, as opposed to a non-homogeneous dispersion containing at least two phases.

Neutralisation and solubiliation with an amine also provides a significant advantage in that during printing and drying the volatile amines would not be expected to corrode the equipment as would volatile acids such as

hydrochloric acid, acetic acid, etc., which are used to solubilise amine-functional copolymers common in the art. Preferred amines for neutralisation include ammonia, dimethylethanolamine, diethylethanolamine, 2-methyl-2-aminopropanol, ———————————

triethylamine, diethanolamine, N,N-dimethyl-2-methyl-2-aminopropanol and the like.

The invention will be illustrated by the following examples whereinall parts and percentages are by weight unless otherweise specificed.

Example 1

(A) 210 Parts of a polyamide (meleoular weight of 28,000) prepared from dimer acid, azelaic acid, piperazine, and ethylene diamine and 362.3 parts of n-propyl alcohol were charged into a four-neck round bottom flask under a blanket of nitrogen and slowly heated to refulx with agitatio. At refulx the polyamide was totally dissolved.

Then a mixture of 51.7 parts of methyl methacrylate, 28.5 parts of glacial acrylic acid, 8.92 parts of hydroxypropyl methacrylate, 92.1 parts of n-propyl alcohol, and 2.94 parts of benzoyl peroxide was added dropwise to the polyamide solution over a period of 1 $\pm$ 1/4 hour while maintaining refulx at 95-100 degrees C.

(B) One hour later, 1/4 of a mixture of 2.68 parts of benzoyl peroxide and 20.7 parts of methyl ethyl ketone was added; and the remainder was added incrementally every hour thereafter for 3 hours. Refluxing was continued until a determination of solids indicated complete conversion of the acrylic monomers.

The product was then cooled to room temperature and discharged.

The resulting copolymer had a weight ratio of 70/30 polyamide/acrylic, a solution viscosity of 24 poises at 40% solids, and exhibited good stability in that the solution viscosity did not change over time.

Example 2

(A) 337 Parts of a polyamide (molecular weight of 28,000 prepared from piperazine, ethylene diamine, azelaic acid, and dimerized fatty acids, and 530.31 parts of n-propyl alcoholwere charged into a stainless steel reactor. The mixture was heated to reflux (97 degrees C.) under a blanket of nitrogen.

Then a mixture of 11.9 parts of tert-butyl methacrylate, 11.9 parts of ethyl acrylate, 29.7 parts of glacial acrylic acid, 5.9 parts of hydroxyethyl acrylate, 59.5 parts of n-propyl alcohol, and 2.0 parts of 97% t-butyl neodecanoate was added over a period of one hour under reflux. The batch was held under reflux for an addtional hour.

(B) One hour later 1/4 of a mixture of 9.9 parts of n-propyl alcohol and 1.8 parts of a t-butyl neodecanoate ws added and the remainder was added incrementally every hour thereafter for 3 hours.

The reaction was continued until the product contained 40% non-volatile solids. 200 Parts of solvent was then distilled off, the product was cooled to 60 C. and filtered.

The resulting copolymer had a polyamide/acrylic ratio of 85/15 by weight, a solids content of 50.2%, a viscosity fo 121 poises at 25 C., and a theoretical acid value of 44, and exhibited good stability in that the viscosity did not change over time.

Example 3

The procedure of Example 2 was repeated except that the polyamide (molecular weight of 28,000) was prepared with sebacic acid instead of azelaic acid. The resultant copolymer solution exhibited inferior stability to the copolymer solution of Example 2 prepared with azelaic acid as the viscosity increased over time.

Example 4

216.0 Parts of an alcohol-soluble polyamide (molecular weight of 5,000) prepared from ethylene diamine, hexamethylene diamine, propionic acid, and dimerized fatty acids and 329.9 parts of n-propyl alcohol were charged into a four-neck round bottom flask under a nitrogen blanket and slowly heated to reflux with agitation. At refulx the polyamide had totally dissolved.

Then a mixture of 24.0 parts of glacial acrylic acid, 24.0 parts of n-propyl alcohol, and 0.79 part of

benzoyl peroxide was added dropwise to the polyamide solution over a one-hour period while maintaining reflux at 95-100 degrees C.

(B) One hour later 1/4 of a mixture of 0.72 part of benzoyl peroxide in 6.1 parts of methyl ethyl ketone was added; the remainder was added at hourly intervals in 3 equal increments.

(C) Three hours later a solution of 0.72 parts of benzoyl peroxide in 6.1 parts of methyl ethyl ketone was added. Refluxing was continued until a solids determinationindicated complete conversion of the acrylic monomer.

Twenty percent of the solvent was then distilled off to remove traces of reactants.

The resulting copolymer had a weight ratio of 90/10 polyamide/acrylic, a viscosity of 15 poises at 45% solids, but exhibited poor stability in that the viscosity increased over time.

Example 5

Flexographic Printing Ink

(A) 60.8 Parts of the product of Example 2 was mixed with 31.8 parts of water, 3.4 parts of ethanol, 2.0 parts of 28% aqua ammonia, and 2.0 parts of diethylethanolamine.

(B) To 48.5 parts of the varnish of part (a) were added with high speed mixing 26.1 parts of titanium dioxide and 25.4 parts of an 80/20 blend of water/ethanol, resulting in a white ink.

(C) The ink was applied by means of a flexographic hand proofer to polypropylene film. The ink had good printbility, gloss, stability, adhesion, a bond strength of at leas 400 grams/linear inch as measured on an Instron bond strength tester, and good crinkle resistance.

Example 6

To illustrate the need for copolymerizing the polyamide and the acrylic monomer, the following experiment was carried out:

The procedure of Example 1 was repeated except that the acrylic monomers were polymerized in the absence of a polyamide. The polymerized acrylate was then added to the polyamide solution. The two solutions were incompatible, and precipitation of the acrylic polymer occurred.

Example 7

A polyamide/acrylic graft copolymer was prepared as follows:

| | | |
|---|---|---|
| (1) | Polyamide (molecular weight of about 11,000) | 408.0 parts |
| (2) | n-propano | 642.6 |
| (3) | Isobutylmethacrylate | 14.4 |
| (4) | Methylmethacrylate | 14.4 |
| (5) | Acrylic Acid | 36.0 |
| (6) | Hydroxypropylacrylate | 7.2 |
| (7) | t-butylperoctoate | 2.38 |
| (8) | n-propanol | 72.0 |
| (9) | t-butylperoctoate | 2.16 |
| (10) | n-propanol | 12.2 |

(A) 408 Parts of a polyamide prepared from dimer acid (83% dimer 17% trimer), propionic acid, azelaic acid, ethylene diamine, and hexamethylene diamine and 642.6 parts of n-propyl alcohol were charged into a four-neck round bottom flask under a blanket of nitrogen and slowly heated to reflux with agitation. At reflux the polyamide had totally dissolved.

Then a mixture of 14.4 parts isobutylmethacrylate, 14.4 parts methylmethacrylate, 36.0 parts of glacial acrylic acid, 7.2 parts of htydroxpropylacrylate, 72.0 parts of n-propyl alcohol, and 2.38 parts of t-butylperoctoate was added dropwise to the polyamide solution over a period of 1 1/4 hour while maintaining reflux at 95 - 100 degrees C.

(B) One hour later, 1/4 of a mixture of 2.16 parts of 6-butylperoctoate and 12.2 parts of n-propanol was added, the remainder was added three times at hourly intervals. Refluxing was continued until a determination of solids indicated complete conversion of the acrylic

monomers. The product was then cooled to room temperature and discharged at 45% solids. The resulting copolymer had a weight ratio of 85/15 of polyamide/acrylic and a solution viscosity of 8 poises, as measured on a Brookfield viscometer at 45% solids and at room temperature.

An aqueous varnish was then prepared as follows:

| | | |
|---|---|---|
| (1) | Polyamide/acrylic graft copolymer composition of Example 7 | 60.1 parts |
| (2) | Water | 36.1 |
| (3) | Diethylethanolamine | 1.9 |
| (4) | Ammonium hydroxide solution | 1.9 |

These ingredients were placed into an osterizer and mixed for approximately 15 minutes. The resultant varnish was cooled to room temperature and poured off.

The varnish was then used to prepare an aqueous ink as follows:

| | | |
|---|---|---|
| (1) | Varnish (as above) | 55 parts |
| (2) | Titanium dioxide | 25.0 |
| (3) | 80/20 (w/w) water/ethanol | 10.0 |

These ingredients were placed into an osterizer and mixed for approximately 30 minutes. The resultant ink was cooled to room temperature and adjusted to a 25 second reading on Zahn #2 cup using a mixture of 80/20 by weight of water /ethanol as the reducing solvent. The pH was adjusted to 9.0-9.5 with additional amines as required. The final ink exhibited good printability; however, both stability and bond strengths of the ink were observed to be inferior. Instability was exhibited in that after 24 hours the ink exhibited a large increase in viscosity. The laminating bond strength was 50-80 grams/linear inch as measured on a Instron bond strength tester.

Example 8

| | | |
|---|---|---|
| (1) | Polyamide (molecular weight of about 15,000) | 204.0 parts |
| (2) | n-propanol | 321.0 |
| (3) | Methylmethacrylate | 7.2 |
| (4) | Isobutylmethacrylate | 7.2 |

| | | |
|---|---|---|
| (5) | Acrylic Acid | 18.0 |
| (6) | Hydroxypropylacrylate | 3.6 |
| (7) | t-butylperoctoate | 1.19 |
| (8) | n-propanol | 36.0 |
| (9) | t-butylperoctoate | 1.08 |
| (10) | n-propanol | 6.10 |

The reaction was carried out with the same procedure as taht used in Example 7. The copolymer had a weight ratio of 85/15 of polyamide/acrylic and a viscosity of 20 poises at 45% solids. The resultant aqueous ink exhibited good adhesion printability, stability, crinkle resistance (both dry and with water) and block resistance on polyolefin films. The bond strength was greater than 500 grams/linear inch, as measured on a Instron bond strength tester.

Example 9

| | | |
|---|---|---|
| (1) | Polyamide (molecular weight of about 5,000) | 204.0 |
| (2) | n-propanol | 321.3 |
| (3) | Methylmethacrylate | 7.28 |
| (4) | Isobutylmethacrylate | 7.2 |
| (5) | Acrylic Acid | 18.0 |
| (6) | Hydroxypropylacrylate | 3.6 |
| (7) | t-butylperoctoate | 1.19 |
| (8) | n-propanol | 36.0 |
| (9) | t-butylperoctoate | 1.08 |
| (10) | n-propanol | 1.10 |

The reaction was carried out with the same proceudre as that used in Example 7. An ink could not be prepared as the copolymer solution was unstable resulting in the physical gelling of the varnish.

Example 10

| | | |
|---|---|---|
| (1) | Polyamide (molecular weight of about 28,000) | 204.0 parts |
| (2) | n-propanol | 321.3 |
| (3) | Isobornylmethacrylate | 7.2 |
| (4) | Isobutylmethacrylate | 7.2 |
| (5) | Acrylic Acid | 18.0 |

| | | |
|---|---|---|
| (6) | Hydroxypropylacrylate | 3.6 |
| (7) | t-butylperoctoate | 1.19 |
| (8) | n-propanol | 36.0 |
| (9) | t-butylperoctoate | 1.0 |
| (10) | n-propanol | 6.1 |

The reaction was carried out following the procedure of Example 7. The copolymer had a weight ratio of 85/15 of polyamide/acrylic and a solution viscosity of 53 posies at 45% solids. The resultant aqueous ink exhibited good adhesion, printability, stability, crinkle resistance and block resistance with a bond strength that 500 grams/linear inch as measured on an Instron bond strength tester.

Example 11

| | | |
|---|---|---|
| (1) | Polyamide (molecular weight of about 45,000) | 210.0 parts |
| (2) | n-propanol | 363.3 |
| (3) | Isobornylmethacrylate | 26.8 |
| (4) | Isobutylmethacrylate | 25.0 |
| (5) | Acrylic Acid | 28.5 |
| (6) | Hydroxypropylacrylate | 8.9 |
| (7) | t-butylperoctoate | 2.94 |
| (8) | n-propanol | 92.1 |
| (9) | t-butylperoctoate | 2.68 |
| (10) | n-propanol | 2.68 |

The reaction was carried out following the procedure of Example 7. The copolymer had a weight ratio of 70/30 of polyamide/acrylic and a viscosity of 200 poises at 45% solids. The resultant aqueous ink exhibited good adhesion, printability, stability, crinkle resistance and block resistance with a bond strength of greater than 400 grams/linear inch as measured on an Instron bond strength tester.

Example 12

| | | |
|---|---|---|
| (1) | Polyamide (molecular weight of about 45,000) | 168.0 parts |
| (2) | n-propanol | 288.71 |
| (3) | Methylmethacrylate | 40.8 |

| | | |
|---|---|---|
| (4) | Acrylic Acid | 24.0 |
| (5) | Dimethylaminoethylmethacrylate | 7.2 |
| (6) | t-butylperoctoate | 2.38 |
| (7) | n-propanol | 72.0 |
| (8) | t-butylperoctoate | 2.16 |
| (9) | n-propanol | 6.1 |

The reaction was carried out following the procedure of Example 7. As the acrylate contained an amino group the ink prepared from the resultant copolymer exhibited poor printability and poor storage stability in that the viscosity increased over time.

Example 13

| | | |
|---|---|---|
| (1) | Polyamide (molecular weight of 28,000) | 210.0 parts |
| (2) | n-propanol | 363.3 |
| (3) | Isobutylmethacrylate | 26.8 |
| (4) | Isobornylmethacrylate | 25.0 |
| (5) | Acrylic Acid | 28.5 |
| (6) | Hydroxypropylacrylate | 8.9 |
| (7) | n-propanol | 92.1 |
| (8) | Azobisisobutyronitrile | 2.94 |
| (9) | n-propanol | 2.68 |
| (10) | Azobisisobutyronitrile | 2.68 |

The reaction was carried out following the procedure of Example 7. An ink could not be prepared from this varnish due to its lack of water-dispersibility even after neutralization.

CLAIMS

1. A graft copolymer of a polyamide with a vinyl monomer.

2. A polymer according to claim 1 wherein the vinyl monomer provides free carboxylic groups and the polymer is neutralised, preferably with an amine.

3. A polymer according to claim 1 in which the vinyl monomer is selected so as to render the copolymer water-dispersable, and is preferably an acrylic monomer.

4. A process for the free radical graft copolymerisation of at least one vinyl monomer on to a polyamide backbone to prepare a water-dispersable polyamide/vinyl graft copolymer which comprises reacting a polyamide with a vinyl monomer in an alcohol solution in the presence of a free radical peroxidic initiator (preferably a peroxy ester), followed by adjusting the pH of the copolymer solution to greater than 7 effective to obtain a water-dispersable copolymer solution.

5. A process according to claim 4 wherein the reaction temperature is within the range of about 60 to 150°C, preferably 75 to 115°C.

6. A process according to claim 4 or claim 5 wherein the ratio of amounts of polyamide:acrylic is about 5-95:95-5 parts by weight, preferably 40-90:10-60 parts by weight.

7. A process according to any of claims 4 to 6 wherein the polyamide has a molecular weight of at least 15,000.

8. A process according to any of claims 4 to 7 wherein the polyamide is a reaction product of dimerized fatty acid, dicarboxylic acid, polyamine and monocarboxylic acid.

9. A process according to any of claims 4 to 8 wherein the vinyl monomer is an acrylic monomer that is preferably free from amino groups and is preferably

chosen from the group consisting of methylmethacrylate, isobutylmethacrylate, hydroxypropylacrylate, isobornylmethacrylate, acrylic acid and mixtures thereof.

10. A process according to any of claims 4 to 9 wherein the copolymer solution is adjusted to a pH of 8.5-10, preferably with an amine, and the vinyl monomer preferably is an acrylic monomer that includes free carboxylic groups.

11. A process according to any of claims 4 to 10 wherein the copolymer solution has a viscosity of 5 to 250 poises, as measured at 40 to 50% solids and at room temperature and wherein the viscosity of the copolymer solution preferably does not change over time.

12. A process according to any of claims 4 to 11 or a polymer according to any of claims 1 to 4 wherein the polymer has a bond strength of at least 300 grams per linear inch.

13. A water-based printing ink containing as the resin component a copolymer according to any of claims 1 to 3 or made by a process according to any of claims 4 to 12.

14. A water-based printing ink containing as the resin component a water-dispersable polyamide/acrylic graft copolymer wherein at least 15% by weight of the copolymer comprises a polyamide-acrylic graft and wherein the ink has a bond strength of at least 300, preferably at least 400, grams/linear inch and preferably has a molecular weight of at least 15,000.